# FASCICULE DE BREVET EUROPEEN

(11) **EP 1 844 223 B1**
(45) Date de publication et mention de la délivrance du brevet: **02.11.2016**
(21) Numéro de dépôt: 05825943.3
(22) Date de dépôt: 13.12.2005
(51) Int. Cl.: F02C 7/042

(54) **AGENCEMENT D'ENTREE D'AIR DE VENTILATION A ELEMENT D'OBTURATION MOBILE**
LÜFTUNGSLUFTEINLASSANORDNUNG MIT BEWEGLICHER SCHLIESSVORRICHTUNG
VENTILATING AIR INTAKE ARRANGEMENT WITH MOBILE CLOSING DEVICE

(30) Priorité: 20.12.2004 FR 0413555
(43) Date de publication de la demande: 17.10.2007
(73) Titulaire: AIRBUS OPERATIONS (SAS), 31060 Toulouse (FR)
(72) Inventeur: PORTE, Alain, F-31770 Colomiers (FR); PRAT, Damien, F-31770 Colomiers (FR)
(74) Mandataire: Gevers & Orès
(86) Numéro de dépôt international: PCT/FR2005/003108
(87) Numéro de publication internationale: WO 2006/067299

(56) Documents cités:
- BE-A- 464 754
- FR-A- 2 589 517
- US-A- 3 915 413
- US-A- 4 641 678
- US-A- 5 226 455
- US-B1- 6 231 006

## Description

La présente invention concerne un agencement d'entrée d'air de ventilation comportant un canal de passage d'air avec un orifice de prise d'air, destiné à ventiler au moins une zone confinée dans un aéronef.

On sait que de tels agencements d'entrée d'air de ventilation sont largement utilisés dans le domaine aéronautique à des fins de renouvellement de l'air dans une zone confinée contenant des matériels thermiquement sensibles et/ou des milieux ambiants dangereux, du type inflammable ou détonant, pour lesquels il est nécessaire d'assurer une ventilation continue de la zone afin d'éviter tout risque de dysfonctionnement des matériels ou d'incident environnant.

Tel est notamment le cas des nombreux dispositifs mécaniques et/ou électriques prévus dans l'espace ou zone confiné annulaire entre la nacelle et le carter externe de soufflante et des compresseurs d'un turboréacteur d'avion. Ces dispositifs, comme par exemple le fadec (full authority digital engine control), le boîtier relais d'accessoires (gearbox), le réservoir d'huile moteur, les composants fluidiques, etc ..., généralement fixés tout autour du carter externe et situés ainsi dans la zone confinée, sont ventilés par de l'air extérieur entrant dans l'agencement par l'orifice de prise d'air pour traverser le canal ménagé dans la nacelle et se diffuser, en sortie du canal, dans la zone confinée. Les dispositifs, de même que les vapeurs d'huile ou autres émanant de cet espace, sont ventilés par l'air frais extérieur diffusé par le canal d'air, ce qui contribue à assurer leur bon fonctionnement.

Pour répondre à la réglementation en vigueur, qui impose un taux de renouvellement d'air approprié par unité de temps de la zone confinée concernée, le canal de passage d'air de l'agencement a une section transversale prédéterminée permettant la circulation d'une quantité d'air suffisante dans le canal pour assurer, à sa sortie, le renouvellement d'air de la zone confinée contenant les dispositifs à ventiler.

Cependant, les dispositifs à refroidir et les vapeurs à chasser ne sont pas ventilés de façon optimale par les agencements d'entrée d'air connus.

En effet, dans ces agencements, si l'air extérieur entrant en amont par l'orifice de prise d'air dans le canal à section transversale prédéterminée de l'agencement et sortant en aval de celui-ci est suffisant pour ventiler correctement les dispositifs lorsque l'avion est en phase de roulage au sol, en phase de décollage ou en phase d'attente, donc à faible vitesse, en revanche, lorsque l'avion est en phase de vol de croisière à une vitesse et une altitude maximales, la quantité d'air ou le débit d'air sortant du canal de l'agencement en direction de la zone à ventiler est trop important. De la sorte, les dispositifs sont trop refroidis d'autant plus que la température de l'air extérieur est très basse à cette altitude de croisière, ce qui peut conduire à des dysfonctionnements. Des mesures ont par ailleurs permis de constater que, dans cette phase de vol, l'air circulant dans la zone confinée via le canal de l'agencement était renouvelé deux fois plus que nécessaire, si bien que le fadec, notamment, est trop refroidi, ce qui peut nuire à son bon fonctionnement.

La présente invention a pour but de remédier à ces inconvénients, et concerne un agencement d'entrée d'air dont la conception permet d'assurer une ventilation optimale d'une zone confinée telle que celle ci-dessus d'un turboréacteur -mais qui peut être également une zone feux ou une zone ventrale de l'avion (belly fairing) ou, d'une façon générale, toute zone plus ou moins close et thermiquement sensible d'un véhicule pour laquelle un renouvellement d'air est souhaité.

A cet effet, l'agencement d'entrée d'air de ventilation comportant au moins un canal de passage d'air avec un orifice de prise d'air, destiné à ventiler au moins une zone confinée dans un aéronef par de l'air extérieur entrant en amont, à travers ledit orifice de prise d'air, dans ledit canal et sortant en aval de celui-ci en direction de ladite zone à ventiler, ledit agencement d'entrée d'air comportant des moyens d'obturation à élément mobile commandable, associés audit canal, et des moyens de commande dudit élément mobile commandable permettant de faire varier la section transversale dudit canal, est remarquable en ce que lesdits moyens de commande comportent un réservoir à volume variable :
- qui est relié audit élément mobile commandable, et
- qui reçoit la pression totale exercée par l'air sur ledit aéronef,
de sorte que la section transversale dudit canal varie en fonction de la vitesse et de l'altitude dudit aéronef.

Ainsi, grâce à l'invention, on peut faire varier de façon automatique la section transversale du canal de l'agencement d'entrée d'air par les moyens d'obturation à élément mobile commandable et modifier, selon les phases de vol de l'avion, le débit d'air entrant dans la zone confinée et, donc, ventiler au mieux les dispositifs concernés.

Par exemple, en vol de croisière de l'avion (vitesse et altitude maximales), la section transversale du canal de l'agencement est avantageusement réduite par l'actionnement de l'élément mobile commandable des moyens d'obturation pour ventiler raisonnablement les dispositifs et éviter ainsi un refroidissement trop important de ces derniers. En revanche, lors du roulage au sol de l'avion ou en phase de décollage (faible vitesse), la section transversale du canal est ouverte au maximum par l'effacement de l'élément mobile desdits moyens d'obturation, pour faire circuler ainsi une quantité d'air maximale dans le canal et ventiler convenablement les dispositifs situés dans la zone confinée.

Ainsi, grâce à l'invention, la quantité d'air prélevée par l'agencement d'entrée d'air de ventilation est adaptée à chaque phase de vol, ce qui minimise la pénalité des performances de l'aéronef due à la ventilation.

Ledit réservoir à volume variable peut être un ensemble cylindre/piston, une vessie, un soufflet, etc ... qui reçoit la pression totale exercée par l'air sur ledit aéronef et qui est relié audit élément mobile commandable. Cette pression totale est prélevée sur l'aéronef par un orifice de prise de pression et, avantageusement, cet orifice de prise de pression est disposé au voisinage dudit orifice de prise d'air.

De préférence, au moins l'une des positions de l'élément mobile desdits moyens d'obturation, définissant ladite section transversale minimale et ladite section transversale maximale, est définie par une butée.

Lesdits moyens d'obturation à élément mobile commandable peuvent être situés à l'entrée dudit canal, au niveau dudit orifice de prise d'air, ou à la sortie dudit canal, dans un diffuseur prolongeant celui-ci et dirigeant l'air en direction de la zone à ventiler.

Ledit élément mobile des moyens d'obturation peut se présenter sous de nombreuses formes. Par exemple, il peut être constitué par une lame élastique, déformée à l'encontre de son élasticité propre par lesdits moyens de commande.

En variante, lesdits moyens d'obturation à élément mobile peuvent comprendre au moins un volet pivotant à axe de rotation commandable contenu dans son plan et perpendiculaire audit canal de passage d'air, de sorte que ledit volet peut pivoter entre deux positions limites pour lesquelles lesdites sections transversales dudit canal sont respectivement minimale et maximale.

Quand lesdits moyens sont prévus à l'entrée dudit canal, ledit orifice de prise d'air peut avoir une section transversale rectangulaire délimitée par des parois latérales deux à deux opposées, et ledit volet est alors agencé au niveau du bord arrière dudit orifice par rapport à l'écoulement de l'air entrant dans celui-ci, son axe de rotation étant parallèle audit bord arrière.

Ainsi, quand ledit volet est dans une position prolongeant ledit bord arrière de l'orifice en l'obturant partiellement, la section transversale du canal est minimale, autorisant un débit d'air de ventilation minimal en direction de l'espace annulaire, et quand il est dans une position faisant saillie vers l'extérieur par rapport à l'orifice, la section transversale du canal est alors maximale, autorisant un débit d'air de ventilation maximal en direction dudit espace.

Avantageusement, autour dudit orifice de prise d'air, est rapporté un cadre rectangulaire dont le côté arrière recouvre le bord arrière longitudinal du volet pivotant et fait office de butée pour ce dernier lorsqu'il occupe l'une ou l'autre de ses deux positions limites. De plus, ledit cadre qui borde ledit orifice, peut porter l'axe rotatif dudit volet pivotant. Ainsi, le cadre et le volet constituent un ensemble monobloc pouvant être rapporté autour dudit orifice.

Dans un autre mode de réalisation, lesdits moyens d'obturation à élément mobile comprennent au moins un papillon rotatif à axe de rotation commandable perpendiculaire audit canal de passage d'air et passant en son centre, de sorte que, quand ledit papillon est dans une position parallèle audit canal, la section transversale de celui-ci est maximale et, quand ledit papillon est dans une position perpendiculaire audit canal en l'obturant partiellement, sa section transversale est minimale.

Dans ce cas, ledit papillon est agencé au niveau dudit diffuseur d'air du canal et son axe rotatif commandable est porté à ses extrémités par des parois latérales opposées dudit diffuseur.

De préférence, des butées sont là aussi prévues dans ledit diffuseur pour marquer les deux positions limites respectivement parallèle et perpendiculaire dudit papillon par rapport audit canal.
Les figures du dessin annexé feront bien comprendre comment l'invention peut être réalisée. Sur ces figures, des références identiques désignent des éléments semblables.
La figure 1 représente schématiquement et partiellement en coupe la nacelle d'un turboréacteur munie d'un agencement d'entrée d'air de ventilation esquissé dans le cadre A, conforme à l'invention.
La figure 2 est une vue de face, partiellement en coupe selon la ligne II-II de la figure 1, de ladite nacelle du turboréacteur, montrant les différents dispositifs à ventiler.
Les figures 3 et 4 illustrent deux variantes de l'agencement conforme à la présente invention, avec des moyens de commande différents.
La figure 5 est une coupe longitudinale agrandie d'un autre mode de réalisation à volet pivotant dudit agencement de la figure 1, dans une position autorisant une entrée d'air de ventilation minimale en direction dudit espace à ventiler.
La figure 6 est une vue de dessus, selon la flèche F de la figure 5, dudit agencement.
La figure 7 est une coupe transversale passant par le volet dudit agencement, selon la ligne VII-VII de la figure 5.
La figure 8 est une coupe de l'agencement analogue à la figure 5 dans une position autorisant une entrée d'air de ventilation maximale.
La figure 9 est une coupe longitudinale d'encore un autre mode de réalisation à papillon horizontal dudit agencement, dans une position autorisant une entrée d'air de ventilation minimale.
Les figures 10 et 11 sont respectivement une vue en bout selon la flèche G et une vue en coupe selon la ligne XI-XI dudit agencement de la figure 9.
La figure 12 est une vue de côté du diffuseur selon la flèche H de la figure 11.
La figure 13 est une coupe de l'agencement analogue à la figure 9, dans une position autorisant une entrée d'air de ventilation maximale.
La figure 14 est une vue en bout dudit agencement selon la flèche J de la figure 13.
La figure 15 est une coupe longitudinale d'une variante de réalisation à papillon vertical dudit agencement, dans une position autorisant une entrée d'air de ventilation maximale.
Les figures 16 et 17 sont respectivement une vue en bout selon la flèche K et une vue de dessus selon la flèche L dudit agencement de la figure 15.
La figure 18 est une coupe de l'agencement analogue à la figure 15, dans une position autorisant une entrée d'air de ventilation minimale.
La figure 19 est une vue en bout dudit agencement selon la flèche M de la figure 18.

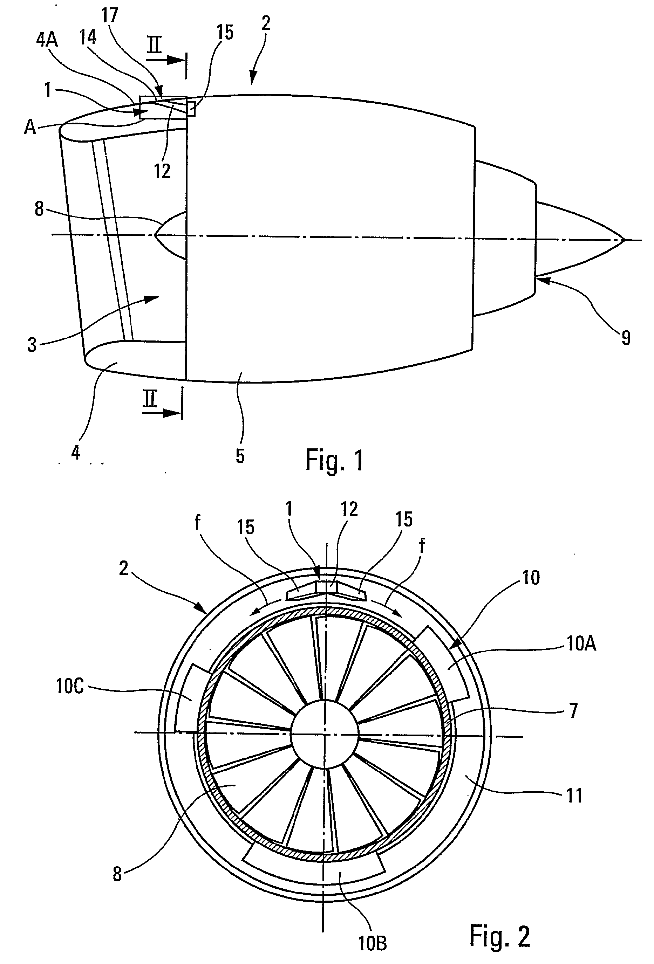

L'agencement d'entrée d'air de ventilation 1, conforme à l'invention et délimité par un rectangle A sur la figure 1, est prévu dans une nacelle 2 d'un moteur d'avion 3, tel qu'un turboréacteur. Comme le montre schématiquement la figure 1, la nacelle 2 comprend, de façon usuelle, une partie avant d'entrée d'air 4 pour l'alimentation en air du moteur, une partie intermédiaire 5 entourant le carter externe 7 de soufflante 8, les compresseurs du moteur et la chambre de combustion et la turbine, d'où émerge le carter externe de la tuyère 9 et son cône.

Différents dispositifs ou équipements mécaniques et/ou électriques 10 sont rapportés sur le carter externe 7 de la soufflante et des compresseurs, c'est-à-dire dans l'espace ou zone annulaire 11 confiné entre la nacelle 2 et le carter externe 7 du moteur 3. On a représenté symboliquement sur la figure 2, certains des dispositifs 10 se trouvant dans cette zone 11, à savoir le fadec 10A, le boîtier relais d'accessoires 10B et le réservoir d'huile moteur 10C.

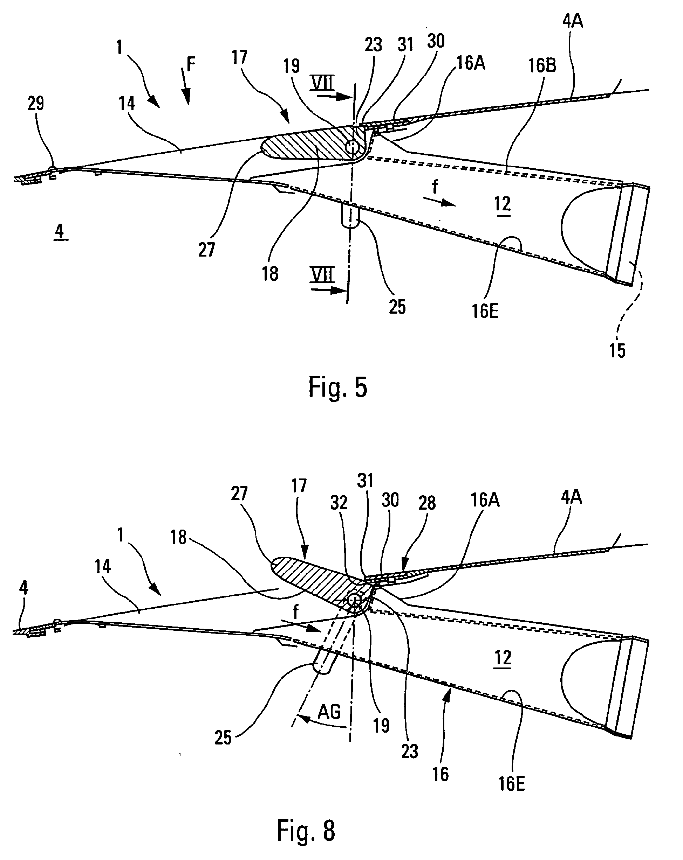

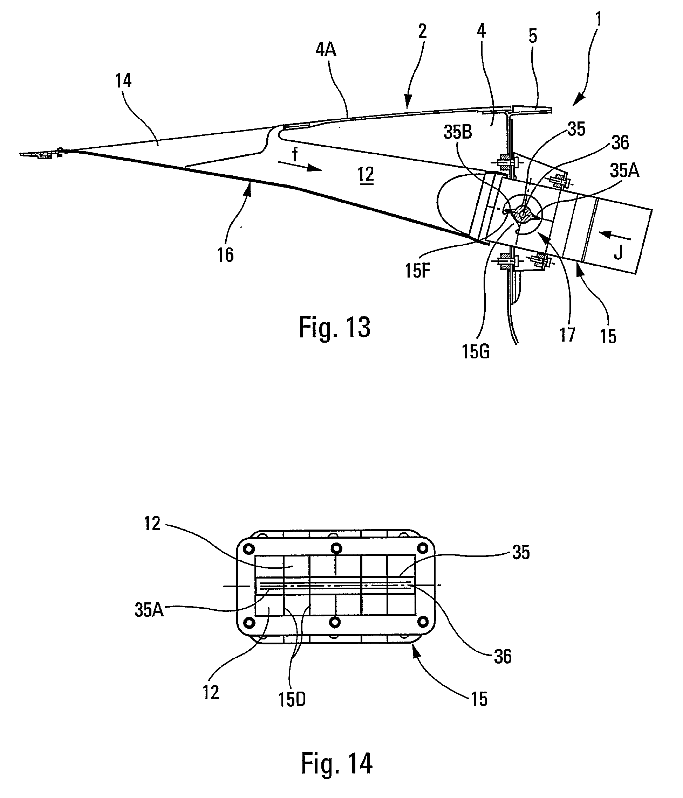

Le renouvellement de l'air dans cette zone confinée 11 pour maintenir les dispositifs 10 dans une plage de température appropriée et permettre leur bon fonctionnement, est assuré par l'agencement d'entrée d'air de ventilation 1 qui est situé en haut de la partie avant 4 de la nacelle 2 et comporte, à cet effet, un canal 12 de passage d'air ménagé dans la paroi structurelle de la partie avant 4 de la nacelle et mettant en communication l'air extérieur avec la zone confinée 11. Pour cela, le canal 12 présente en amont un orifice 14 de prise d'air et, en aval, un diffuseur 15 (voir aussi les figures 5, 8, 9, 13 et 15) en relation avec ledit espace, débouchant dans la partie centrale 5 de la nacelle.

Pour optimiser la ventilation, le canal 12 de passage d'air est légèrement incliné par rapport à la surface extérieure 4A de la partie 4 de la nacelle et se dirige en aval vers l'axe longitudinal du moteur, pour prélever et amener au mieux l'air extérieur frais dans le canal et l'évacuer ensuite tangentiellement par le diffuseur 1 5 à double sortie, comme le montrent les flèches f sur la figure 2, des deux côtés de l'espace confiné annulaire 11.

Dans les exemples représentés, le profil général du canal 12 de l'agencement 1 est légèrement évolutif, c'est-à-dire qu'après avoir convergé à la suite de son orifice de prise d'air 14 tangentiel, il diverge quelque peu en direction du diffuseur 1 5 et sa section transversale, délimitée par des parois latérales 16, est rectangulaire.

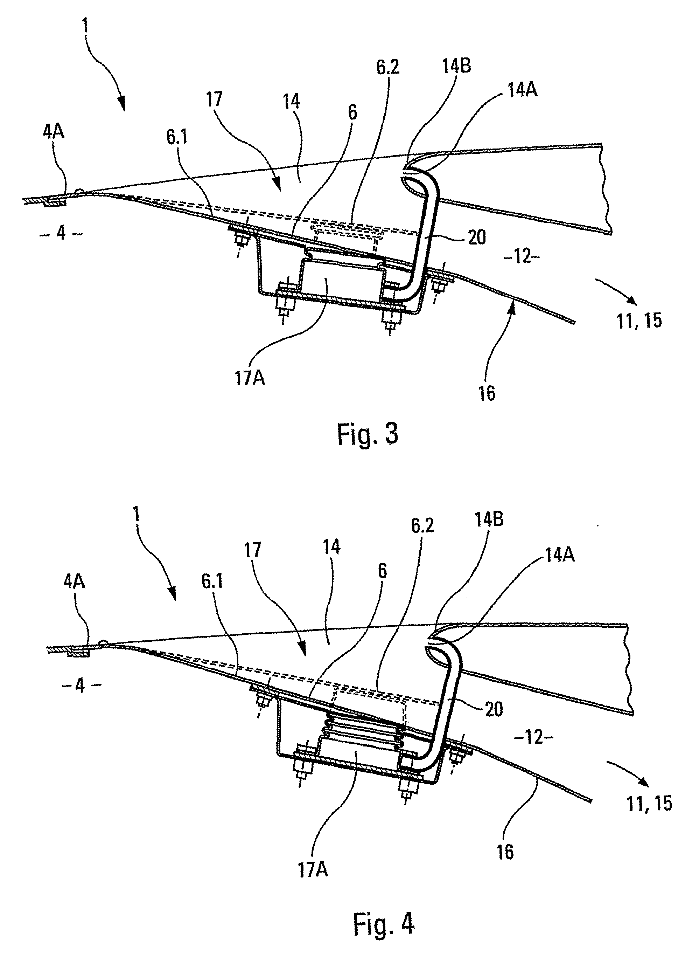

Conformément à la présente invention, cette section transversale du canal 12 est rendue réglable grâce à des moyens d'obturation 17 à élément mobile commandable. De cette façon, on peut ainsi diminuer ou augmenter la quantité ou le débit d'air de ventilation circulant dans le canal 12 en direction de la zone confinée 11, en fonction de la vitesse et de l'altitude de l'avion, comme cela est illustré schématiquement sur les figures 3 et 4.

Sur ces figures, ledit élément mobile commandable des moyens d'obturation 17 est formé par une lame élastique 6, disposée dans l'orifice 14 sur toute sa largeur et fixée à la surface extérieure 4A de la partie avant 4 de la nacelle. De plus, lesdits moyens d'obturation 17 montrés par les figures 3 et 4 comportent des moyens de commande 17A ou 17B, respectivement, aptes à agir automatiquement sur ladite lame élastique 6 à l'encontre de son élasticité propre. Le moyen de commande 17A de la figure 3 est un vérin pneumatique, alors que le moyen de commande 17B de la figure 4 est une vessie ou soufflet. La chambre dudit vérin pneumatique 17A et le soufflet 17B sont en communication, par l'intermédiaire d'un conduit 20, avec un orifice de prise de pression 14A prévu à la périphérie 14B de l'orifice 14 et prélevant la pression totale (ou pression d'arrêt) de l'air sur la nacelle 2 du moteur d'avion 3. Bien entendu, pour ne pas perturber l'écoulement d'air à l'intérieur du canal 12, le conduit 20 peut passer à l'extérieur de celui-ci.

Lorsque cette pression totale est faible, le vérin 17A et le soufflet 17B sont en position rétractée et la lame élastique 6 occupe une position 6.1, en butée sur le vérin 17A ou le soufflet 17B, prolongeant les parois de l'orifice de prise d'air 14 et/ou du canal 12. Ce canal 12 présente donc alors une section transversale maximale autorisant un débit d'air maximal en direction de la zone 11.

Au contraire, lorsque la pression totale augmente, le vérin 17A et le soufflet 17B se dilatent en repoussant la lame élastique 6 qui fait alors saillie dans l'orifice de prise d'air 14 et/ou le canal 12. Ainsi, en fonction de la valeur de ladite pression totale, la lame 6 peut prendre une pluralité de positions saillantes 6.2 obturant partiellement en conséquence le canal 12. Lorsque la pression totale atteint sa valeur maximale, correspondant à la vitesse maximale et à l'altitude maximale de l'avion, la lame 6 obture le canal 12, de façon que celui-ci présente une section transversale minimale autorisant un débit d'air minimal en direction de la zone 11.

Dans le mode de réalisation montré sur les figures 5 à 8, l'élément mobile commandable des moyens d'obturation 17 de l'agencement 1 sont définis par un volet pivotant 18, situé au niveau de l'orifice de prise d'air rectangulaire 14 du canal 12 et solidaire d'un axe de rotation 19 pouvant entraîner, par l'intermédiaire du moyen de commande 17A ou 17B, la rotation du volet 18 entre deux positions limites distinctes pour lesquelles la section transversale dudit canal 12, au niveau de l'orifice 14, est minimale (figure 5) ou maximale (figure 8).

En particulier, le volet 18 est agencé, par rapport au sens d'écoulement de l'air extérieur dans le canal (flèche f figure 3), devant le bord arrière 16A de l'orifice rectangulaire 14, faisant la liaison entre la surface extérieure 4A de la partie 4 de la nacelle et la paroi correspondante 16B (supérieure sur la figure 5) du canal. L'axe de rotation 19 du volet est parallèle au bord arrière 16A et se compose, dans cet exemple, de deux embouts identiques 21 logés aux extrémités respectives d'un passage axial 22 prévu dans le bord longitudinal 23 du volet, tourné parallèlement vers le bord arrière 16A de l'orifice d'entrée d'air 14.

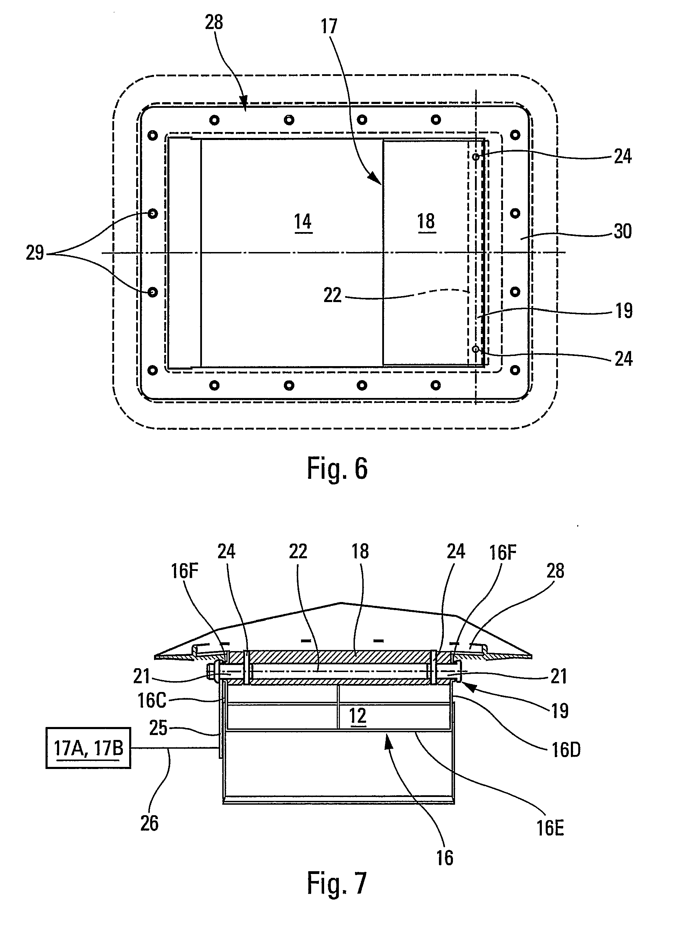

Comme le montrent notamment les figures 6 et 7, la longueur du volet 18 correspond sensiblement à la largeur de l'orifice rectangulaire 14 et sa largeur est bien entendu inférieure à la longueur dudit orifice pour une obturation partielle de celui-ci. Les embouts 21 s'engagent respectivement par des trous 16F dans les parois latérales opposées 1 6C et 16D du canal et portent ainsi ledit volet. Pour assurer la liaison en rotation des deux embouts 21 avec le volet 18, deux broches ou goupilles 24 traversent radialement les embouts et le volet. Et pour assurer le pivotement du volet 18 entre ses deux positions limites, et toute autre position intermédiaire, on prévoit un levier 25 extérieur au canal de passage d'air 12 et solidaire en rotation de l'un des embouts 21. Ce levier 25 est relié, par une liaison 26, au moyen de commande 17A ou 17B.

Dans la position illustrée sur la figure 5, on voit que le volet 18, qui prolonge le bord arrière 16A, est contenu dans le plan de l'orifice de prise d'air 14 et obture ainsi partiellement celui-ci. De la sorte, la section transversale de passage d'air du canal, à ce niveau, délimitée par le bord longitudinal libre 27 du volet et par les parois inférieure 16E et latérales 16C, 16D du canal, est réduite et dans ce cas minimale.

Une telle configuration du volet 18 réduisant la section transversale du canal 12 autorise alors un débit d'air minimum en direction de la zone 11 à ventiler contenant les dispositifs 10 et est particulièrement recommandée lorsque l'avion est en vol de croisière, c'est-à-dire à haute altitude et à vitesse élevée, en évitant de trop refroidir les dispositifs 10.

On remarque, par ailleurs, sur les figures 5 à 7 que, tout autour de l'orifice de prise d'air 14, est rapporté un cadre rectangulaire 28 par des vis 29, qui délimite ainsi ledit orifice. Le côté arrière extérieur 30 du cadre, fixé au bord arrière 16A, recouvre en partie le bord longitudinal 23 du volet 18 et définit, comme le montre la figure 5, une butée 31 marquant la position limite occupée par le volet et l'empêchant ainsi de pivoter davantage vers la gauche sur la figure 5 et de trop réduire la section transversale du canal de passage d'air 12.

Le cadre 28 qui borde l'orifice 14, peut par ailleurs porter, par ses côtés latéraux parallèles aux parois 16C, 16D, l'axe rotatif 19 du volet pivotant 18 et constituer, avec ce dernier, un ensemble monobloc rapporté par vissage sur la partie 4 de la nacelle.

Comme le montre la figure 8, sous l'action du moyen de commande 17A ou 17B et via la liaison 26, le levier 25 a pivoté angulairement dans le sens dextrorsum (angle AG), entraînant dans sa rotation le volet 18 par l'intermédiaire des embouts 21 et des broches 24. Le volet 18 fait alors saillie vers l'extérieur par rapport à l'orifice de prise d'air 14 et ouvre davantage celui-ci, de sorte que la section transversale du canal 12 augmente et est maximale dans cette autre position limite du volet, autorisant un débit d'air maximal en direction de la zone 11 à ventiler contenant les dispositifs. A nouveau, cette position limite du volet est marquée par le contact d'une encoche 32 prévue sur la face extérieure du bord 23 du volet 18, avec le côté arrière 30 du cadre 28, en définissant la butée 31.

Une telle configuration du volet 18 est notamment souhaitable lorsque la vitesse de l'avion est faible, particulièrement durant les phases de roulage au sol, de décollage ou d'attente. Le renouvellement de l'air dans la zone confinée est ainsi assuré plusieurs fois par unité de temps.

Bien entendu, grâce au moyen de commande 17A ou 17B, le débit d'air diffusé dans la zone 11 est modulable entre les deux valeurs maximale et minimale en fonction de la valeur de la pression totale prélevée par l'orifice 14A.

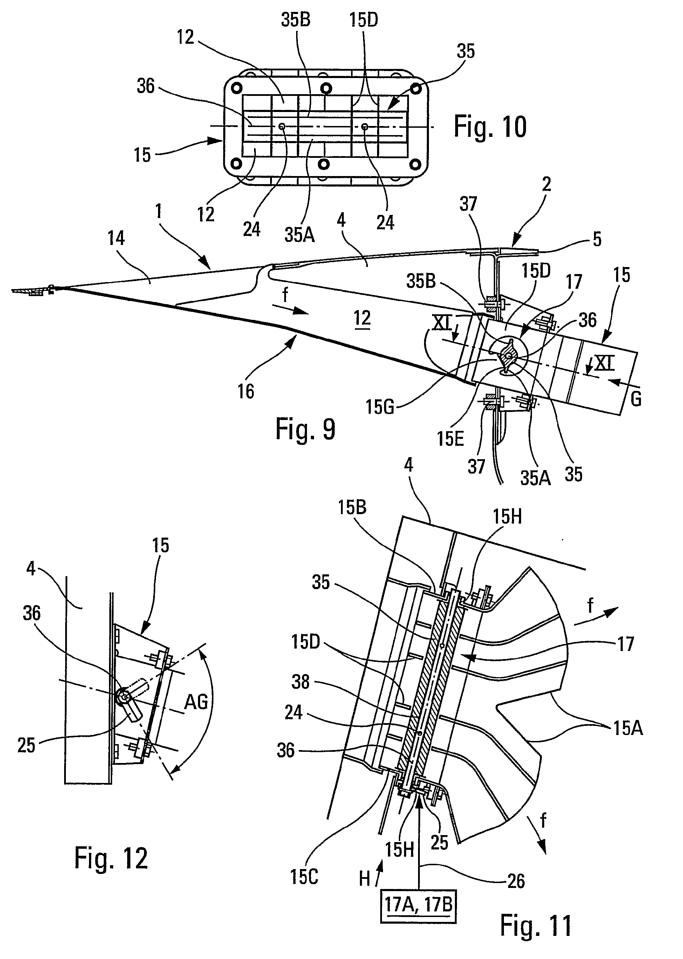

Dans le mode de réalisation montré sur les figures 9 à 12, les moyens d'obturation à élément mobile commandable 17 de l'agencement 1 sont définis par un papillon rotatif 35 dont l'axe de rotation 36 est non seulement perpendiculaire audit canal 12, mais aussi horizontal par rapport à celui-ci et passe en son centre.

Plus particulièrement, le papillon rotatif 35 est monté dans le diffuseur 15 du canal 12, c'est-à-dire à sa sortie et, comme le montrent les figures 9 et 10, le diffuseur est fixé à l'arrière de la partie 4 de la nacelle 2 par des organes de fixation 37 tels que des vis, et sa double sortie divergente 15A représentée sur la figure 11 diffuse l'air frais en direction de l'espace annulaire 11, des deux côtés de celui-ci.

Structurellement, l'axe rotatif 36 du papillon traverse un passage central 38 prévu dans le corps du papillon et est porté à ses extrémités par les parois latérales opposées 15B, 15C du diffuseur, via des trous correspondants 15H, ménagés dans celles-ci, comme le montre la figure 11. De manière analogue à la réalisation précédente, des broches ou des goupilles 24 assurent la liaison en rotation de l'axe 36 avec le papillon 35.

On voit par ailleurs, sur les figures 9 à 11, que le diffuseur 15 comporte à l'intérieur des cloisons intermédiaires de séparation 15D à travers lesquelles passe axialement le corps du papillon 35. Outre le fait qu'elles permettent de rigidifier le diffuseur et de canaliser au mieux l'air frais en direction de l'espace annulaire 11, les cloisons 15D définissent des butées 15E, 15F pour les deux positions limites pouvant être occupées par le papillon 35.

Par exemple, sur les figures 9 à 11, le papillon rotatif se trouve, sous l'action du moyen de commande 17A ou 17B relié par la liaison 26 au levier extérieur 25 solidaire de l'axe 36 (figure 11), dans une position perpendiculaire au canal 12 de passage d'air, de sorte que la section transversale de ce dernier est réduite et minimale, puisqu'il est partiellement obturé par les ailes 35A, 35B du papillon 35. Comme pour le mode de réalisation montré par les figures 5 à 7, une telle configuration est recommandée lorsque l'avion est en vol de croisière, pour les raisons évoquées préalablement. Dans cette position limite, l'une 35A des ailes du papillon s'applique alors contre l'un des côtés d'un ergot 15G prévu coaxialement dans chaque cloison intermédiaire 15D, marquant ainsi ladite position. Ce côté de chaque ergot définit alors la butée 15E.

Dimensionnellement, comme le montrent notamment les figures 10 et 11, la largeur du papillon est sensiblement égale à la dimension correspondante horizontale du canal rectangulaire, tandis que sa hauteur (figures 9 et 10) est inférieure à l'autre dimension verticale du canal, de façon à laisser passer un débit d'air minimal prédéterminé au-dessus et en-dessous des ailes du papillon en direction de l'espace annulaire, lorsqu'il occupe la position illustrée sur les figures 10 et 11, à savoir perpendiculaire à l'écoulement f de l'air dans le canal 12.

Dans l'autre de ses positions limites illustrée en regard des figures 11 et 12, sous l'action du moyen de commande 17A ou 17B ayant entraîné une rotation de 90° du levier 25 (angle AG sur la figure 12) et donc de l'axe 36, le papillon 35 se trouve dans une position horizontale, parallèle au canal 12 de passage d'air, de sorte que la section transversale de ce dernier est alors maximale. L'autre aile 35B du papillon, qui a effectué une rotation de 90°, s'applique alors contre l'autre côté de l'ergot 15G prévu dans chacune des cloisons intermédiaires 15D, cet autre côté définissant la butée 15F. Un débit d'air maximum traverse alors le diffuseur 15 du canal pour ventiler ainsi les dispositifs sensibles 10 et autres vapeurs dangereuses se trouvant dans l'espace annulaire 11, notamment lorsque la vitesse de l'avion est faible.

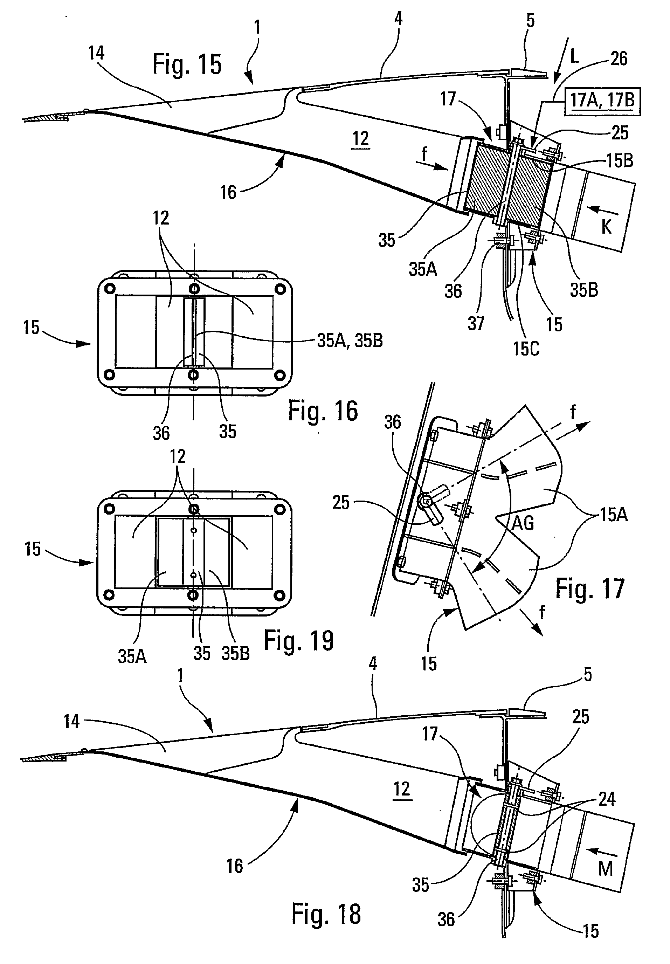

Dans la variante de réalisation montrée sur les figures 15 à 17, les moyens d'obturation à élément mobile commandable 17 de l'agencement 1 sont également définis par un papillon rotatif 35 mais dont l'axe de rotation 36, qui est toujours perpendiculaire audit canal 12, est alors agencé verticalement par rapport à celui-ci et passe en son centre.

Dans ce cas, la hauteur du papillon 35 est sensiblement égale à la dimension correspondante verticale du canal rectangulaire 12, tandis que sa largeur est inférieure à la dimension horizontale du canal, de façon à laisser passer un débit d'air minimal prédéterminé des deux côtés latéraux des ailes 35A, 35B du papillon en direction de l'espace annulaire, lorsqu'il occupe la position limite illustrée sur les figures 18 et 19, perpendiculaire au canal, et un débit d'air maximal prédéterminé lorsqu'il occupe l'autre position limite, confondue avec le canal, illustrée sur les figures 15 et 16.

Structurellement, cette variante de réalisation est semblable à la réalisation précédente, à savoir que le papillon 35 est solidaire d'un axe de rotation 36 porté par les parois latérales dans ce cas supérieure et inférieure 15B, 15C du diffuseur 15 également fixé à l'arrière de la partie 4 de la nacelle. A l'une des extrémités de l'axe rotatif 36 est agencé le levier 25 lié en rotation à l'axe et commandable en rotation par l'organe moteur 17A ou 17B via la liaison 26.

La rotation du levier de 90° (angle AG, figure 17) entraîne celle du papillon 35 par l'intermédiaire de l'axe 36 via les broches 24, lequel papillon peut prendre soit la position parallèle au canal (figures 15 et 16), pour laquelle la section transversale du canal est maximale (puisque les ailes 35A et 35B sont en alignement avec ledit canal) et autorise un débit d'air maximal en direction des dispositifs de l'espace annulaire 11, via le diffuseur 15 à double sortie 15A, soit la position perpendiculaire au canal (figures 18 et 19), pour laquelle la section transversale du canal est minimale (puisque les ailes du papillon sont perpendiculaires audit canal en l'obturant partiellement) et autorise un débit d'air minimal en direction de l'espace annulaire 11.

Bien entendu, quels que soient les modes de réalisation utilisés, tout autre position intermédiaire de l'élément mobile (volet, papillon) des moyens d'obturation 17 entre les deux positions limites est obtenue grâce aux moyens de commande 17A et 17B pour moduler au mieux le débit d'air de ventilation souhaité par la variation de la section transversale du canal, en fonction notamment de la vitesse et de l'altitude de l'avion.

## Revendications

1. Agencement d'entrée d'air de ventilation (1) comportant au moins un canal (12) de passage d'air avec un orifice (14) de prise d'air, destiné à ventiler au moins une zone confinée (11) dans un aéronef par de l'air extérieur entrant en amont, à travers ledit orifice de prise d'air, dans ledit canal et sortant en aval de celui-ci en direction de ladite zone à ventiler, ledit agencement d'entrée d'air comportant des moyens d'obturation à élément mobile commandable (17), associés audit canal (12), et des moyens de commande (17A, 17B) dudit élément mobile commandable permettant de faire varier la section transversale dudit canal,
**caractérisé en ce que** lesdits moyens de commande comportent un réservoir à volume variable :
- qui est relié audit élément mobile commandable (17), et
- qui reçoit la pression totale exercée par l'air sur ledit aéronef,
de sorte que la section transversale dudit canal varie en fonction de la vitesse et de l'altitude dudit aéronef.

2. Agencement selon la revendication 1,
**caractérisé en ce que** ledit réservoir à volume variable est un ensemble cylindre-piston.

3. Agencement selon la revendication 1,
**caractérisé en ce que** ledit réservoir à volume variable est du type vessie ou soufflet.

4. Agencement selon l'une des revendications 1 à 3,
**caractérisé en ce que** ladite pression totale est prélevée par un orifice de prise de pression disposé au voisinage dudit orifice de prise d'air.

5. Agencement selon l'une des revendications 1 à 4,
**caractérisé en ce qu'**au moins l'une des positions de l'élément mobile desdits moyens d'obturation (17), définissant la section transversale minimale et la section transversale maximale dudit canal, est définie par une butée (15E, 15F, 31) pour ledit élément mobile.

6. Agencement selon l'une des revendications 1 à 5,
**caractérisé en ce que** lesdits moyens d'obturation à élément mobile commandable (17) sont situés à l'entrée dudit canal (12), au niveau dudit orifice de prise d'air (14).

7. Agencement selon l'une des revendications 1 à 5,
**caractérisé en ce que** lesdits moyens d'obturation à élément mobile commandable (17) sont situés à la sortie dudit canal (12), dans un diffuseur (15) prolongeant celui-ci et dirigeant l'air en direction de la zone à ventiler (11).

8. Agencement selon l'une des revendications 1 à 7,
**caractérisé en ce que** l'élément mobile desdits moyens d'obturation est une lame élastique (6), déformée à l'encontre de son élasticité propre par lesdits moyens de commande (17A, 17B).

9. Agencement selon l'une des revendications 1 à 7,
**caractérisé en ce que** lesdits moyens d'obturation à élément mobile (17) comprennent au moins un volet pivotant (18) à axe de rotation commandable (19) contenu dans son plan et perpendiculaire audit canal de passage d'air (12), de sorte que ledit volet (18) peut pivoter entre deux positions limites pour lesquelles lesdites sections transversales dudit canal (12) sont respectivement minimale et maximale.

10. Agencement selon les revendications 6 et 9,
**caractérisé en ce que** ledit orifice de prise d'air (14) a une section transversale rectangulaire délimitée par des parois latérales deux à deux opposées et ledit volet (18) est agencé au niveau du bord arrière (16A) dudit orifice (14) par rapport à l'écoulement de l'air entrant dans celui-ci, son axe de rotation (19) étant parallèle audit bord arrière.

11. Agencement selon la revendication 10,
**caractérisé en ce que**, autour dudit orifice de prise d'air (14), est rapporté un cadre rectangulaire (28) dont le côté arrière (30) recouvre le bord arrière longitudinal (23) du volet pivotant (28) et fait office de butée pour ce dernier lorsqu'il occupe l'une ou l'autre de ses positions limites.

12. Agencement selon la revendication 11,
**caractérisé en ce que** ledit cadre (28), qui borde ledit orifice (14), porte l'axe rotatif (19) dudit volet pivotant (18).

13. Agencement selon l'une des revendications 1 à 7,
**caractérisé en ce que** lesdits moyens d'obturation à élément mobile (17) comprennent au moins un papillon rotatif (35) à axe de rotation commandable (36) perpendiculaire audit canal de passage d'air (12) et passant en son centre, de sorte que, quand ledit papillon (35) est dans une position parallèle audit canal, la section transversale de celui-ci est maximale et, quand ledit papillon est dans une position perpendiculaire audit canal en l'obturant partiellement, sa section transversale est minimale.

14. Agencement selon les revendications 7 et 13,
**caractérisé en ce que** ledit papillon (35) est agencé au niveau dudit diffuseur d'air (15) du canal (12) et son axe rotatif commandable (36) est porté à ses extrémité par des parois latérales opposées (15B, 15C) dudit diffuseur.

15. Agencement selon la revendication 14,
**caractérisé en ce que** des butées (15E, 15F) sont prévues dans ledit diffuseur (15) pour marquer les deux positions limites respectivement parallèle et perpendiculaire dudit papillon (35) par rapport audit canal (12).

16. Agencement selon l'une des revendications 9 à 15,
**caractérisé en ce que** sur l'une desdites extrémités dudit axe rotatif (19, 36) duquel est solidaire ledit élément mobile (18, 35), est prévu un levier (25) extérieur audit canal (12) et relié auxdits moyens de commande (17A, 17B).

## Patentansprüche

1. Anordnung zum Einlass von Luft zur Lüftung (1), umfassend mindestens einen Kanal (12) zum Durchlassen von Luft mit einer Öffnung (14) zur Entnahme von Luft, die vorgesehen ist, um mindestens eine begrenzte Zone (11) in einem Luftfahrzeug mit äußerer Luft zu lüftern, die stromaufwärts durch die Öffnung zur Entnahme von Luft in den Kanal eintritt und stromabwärts von diesem in der Richtung der zu belüftenden Zone austritt, wobei die Anordnung zum Einlass Verschlussmittel mit einem beweglichen, steuerbaren Element (17), die dem Kanal (12) zugeordnet sind, und Steuermittel (17A, 17B) des mobilen, steuerbaren Elements umfasst, die es ermöglichen den transversalen Querschnitt des Kanals zu variieren, **dadurch gekennzeichnet, dass** die Steuermittel einen Behälter mit variablem Volumen umfassen:
- der mit dem mobilen steuerbaren Element (17) verbunden ist, und
- der den gesamten Druck erhält, der durch die Luft in dem Luftfahrzeug ausgeübt wird, so dass der transversale Querschnitt des Kanals als Funktion der Geschwindigkeit und der Höhe des Luftfahrzeugs variiert.

2. Anordnung nach Anspruch 1, **dadurch gekennzeichnet, dass** der Behälter mit variablem Volumen eine Kolben-Zylinder-Einheit ist.

3. Anordnung nach Anspruch 1, **dadurch gekennzeichnet, dass** der Behälter mit variablem Volumen vom Typ Blase oder Balg ist.

4. Anordnung nach einem der Ansprüche 1 bis 3, **dadurch gekennzeichnet, dass** der gesamte Druck durch eine Öffnung zur Entnahme von Druck entnommen wird, die in der Nähe der Öffnung zur Entnahme von Luft vorgesehen ist.

5. Anordnung nach einem der Ansprüche 1 bis 4, **dadurch gekennzeichnet, dass** mindestens eine der Positionen des beweglichen Elements der Verschlussmittel (17), welche den transversalen minimalen Querschnitt und den transversalen maximalen Querschnitt des Kanals definieren, durch einen Anschlag (15E, 15F, 31) für das bewegliche Element definiert ist.

6. Anordnung nach einem der Ansprüche 1 bis 5, **dadurch gekennzeichnet, dass** die Verschlussmittel mit einem beweglichen steuerbaren Element (17) am Eingang des Kanals (12) bei der Öffnung zur Entnahme von Luft (14) gelegen sind.

7. Anordnung nach einem der Ansprüche 1 bis 5, **dadurch gekennzeichnet, dass** die Verschlussmittel mit einem beweglichen steuerbaren Element (17) an dem Ausgang des Kanals (12) in einem Diffusor (15) gelegen sind, der diesen verlängert und die Luft in Richtung der zu belüftenden Zone (11) leitet.

8. Anordnung nach einem der Ansprüche 1 bis 7, **dadurch gekennzeichnet, dass** das mobile Element der Verschlussmittel eine elastische Klinge (6) ist, die gegen ihre eigene Elastizität durch die Steuermittel (17A, 17B) verformt wird.

9. Anordnung nach einem der Ansprüche 1 bis 7, **dadurch gekennzeichnet, dass** die Verschlussmittel mit einem beweglichen steuerbaren Element (17) zumindest eine schwenkbare Klappe (18) mit einer steuerbaren Drehachse (19) umfassen, die in ihrer Ebene enthalten ist und senkrecht zu dem Kanal zum Durchlassen von Luft (12) ist, so dass die Klappe (18) zwischen zwei Grenzpositionen geschwenkt werden kann, für welche die transversalen Querschnitte des Kanals (12) minimal bzw. maximal sind.

10. Anordnung nach den Ansprüchen 6 und 9, **dadurch gekennzeichnet, dass** die Öffnung zur Entnahme von Luft (14) einen rechteckigen transversalen Querschnitt hat, der durch die beiden gegenüberliegenden seitlichen Wände begrenzt ist, und die Klappe (18) bei der hinteren Kante (16A) der Öffnung (14) mit Bezug auf die Strömung der Luft, die darin eintritt, angeordnet ist, wobei ihre Drehachse (19) zu der hinteren Kante parallel ist.

11. Anordnung nach Anspruch 10, **dadurch gekennzeichnet, dass** um die Öffnung zur Entnahme von Luft (14) ein rechteckiger Rahmen (28) angestückelt ist, dessen hintere Seite (30) die longitudinale hintere Kante (23) der schwenkbaren Klappe (28) bedeckt, und der als Anschlag für die letztere dient, wenn sie die eine oder andere seiner Grenzpositionen einnimmt.

12. Anordnung nach Anspruch 11, **dadurch gekennzeichnet, dass** der Rahmen (28), der die Öffnung (14) begrenzt, die Drehachse (19) der schwenkbaren Klappe (18) trägt.

13. Anordnung nach einem der Ansprüche 1 bis 7, **dadurch gekennzeichnet, dass** die Verschlussmittel mit einem beweglichen Element (17) mindestens eine drehbare Drosselklappe (35) mit einer steuerbaren Drehachse (36) umfassen, die senkrecht zu dem Kanal zum Durchlassen von Luft (12) ist und durch sein Zentrum verläuft, so dass, wenn die Drosselklappe (35) in einer Position parallel zu dem Kanal ist, der transversale Querschnitt desselben maximal ist, und wenn die Drosselklappe in einer Position senkrecht zu dem Kanal ist, wobei sie ihn teilweise verschließt, sein transversaler Querschnitt minimal ist.

14. Anordnung nach den Ansprüchen 7 und 13, **dadurch gekennzeichnet, dass** die Drosselklappe (35) an dem Diffusor von Luft (15) des Kanals (12) angeordnet ist, und ihre steuerbare Drehachse (36) an ihren Enden durch gegenüberliegende seitliche Wände (15B, 15C) des Diffusors getragen wird.

15. Anordnung nach Anspruch 14, **dadurch gekennzeichnet, dass** die Anschläge (15E, 15F) in dem Diffusor (15) vorgesehen sind, um die beiden Grenzpositionen parallel bzw. senkrecht zu der Drosselklappe (35) mit Bezug auf den Kanal (12) zu markieren.

16. Anordnung nach einem der Ansprüche 9 bis 15, **dadurch gekennzeichnet, dass** an einem der Enden der Drehachse (19, 36), mit der das bewegliche Element (18, 35) einstückig ausgebildet ist, ein Hebel (25) vorgesehen ist, der außerhalb des Kanals (12) ist und mit den Steuermitteln (17A, 17B) verbunden ist.

## Claims

1. A ventilating air intake arrangement (1) comprising at least one air duct (12) with an air intake orifice (14), designed to ventilate at least one confined zone (11) in an aircraft with outside air entering upstream, through said air intake orifice, into said duct and exiting downstream of the latter toward said zone to be ventilated, said air intake arrangement comprising controllable mobile element closing means (17), associated with said duct (12), and means (17A, 17B) of controlling said controllable mobile element making it possible to vary the cross section of said duct,
**characterized in that** said control means comprise a variable volume reservoir:
- that is connected to said controllable mobile element (17), and
- that receives the total pressure exerted by the air on said aircraft,
so that the cross section of said duct varies according to the speed and altitude of said aircraft.

2. The arrangement as claimed in claim 1, **characterized in that** said variable volume reservoir is a cylinder-piston assembly.

3. The arrangement as claimed in claim 1, **characterized in that** said variable volume reservoir is of the bladder or bellows type.

4. The arrangement as claimed in one of claims 1 to 3,
**characterized in that** said total pressure is taken in via a pressure intake orifice placed in the vicinity of said air intake orifice.

5. The arrangement as claimed in one of claims 1 to 4,
**characterized in that** at least one of the positions of the mobile element of said closing means (17), defining the minimum cross section and the maximum cross section of said duct, is defined by a stop (15E, 15F, 31) for said mobile element.

6. The arrangement as claimed in one of claims 1 to 5,
**characterized in that** said controllable mobile element closing means (17) are situated at the entrance of said duct (12), at said air intake orifice (14).

7. The arrangement as claimed in one of claims 1 to 5,
**characterized in that** said controllable mobile element closing means (17) are situated at the exit of said duct (12), in a diffuser (15) extending the latter and directing the air toward the zone to be ventilated (11).

8. The arrangement as claimed in one of claims 1 to 7,
**characterized in that** the mobile element of said closing means is an elastic plate (6), deformed against its own elasticity by said control means (17A, 17B).

9. The arrangement as claimed in one of claims 1 to 7,
**characterized in that** said mobile element closing means (17) comprise at least one pivoting flap (18) with a controllable rotation shaft (19) contained in its plane and perpendicular to said air duct (12), so that said flap (18) may pivot between two limit positions for which said cross sections of said duct (12) are respectively minimal and maximal.

10. The arrangement as claimed in claims 6 and 9,
**characterized in that** said air intake orifice (14) has a rectangular cross section delimited by opposite, two by two, side walls and said flap (18) is arranged at the rear edge (16A) of said orifice (14) relative to the flow of the air entering the latter, its rotation shaft (19) being parallel to said rear edge.

11. The arrangement as claimed in claim 10,
**characterized in that**, around said air intake orifice (14), a rectangular frame (28) is fitted whose rear side (30) overlaps the longitudinal rear edge (23) of the pivoting flap (28) and serves as a stop for the latter when it occupies one or other of its limit positions.

12. The arrangement as claimed in claim 11,
**characterized in that** said frame (28), which borders said orifice (14), supports the rotary shaft (19) of said pivoting flap (18).

13. The arrangement as claimed in one of claims 1 to 7,
**characterized in that** said mobile element closing means (17) comprise at least one rotary throttle valve (35) with a controllable rotation shaft (36) perpendicular to said air duct (12) and passing in its centre, so that, when said throttle valve (35) is in a position parallel to said duct, the cross section of the latter is maximal and, when said throttle valve is in a position perpendicular to said duct, partially closing it, its cross section is minimal.

14. The arrangement as claimed in claims 7 and 13,
**characterized in that** said throttle valve (35) is arranged at said air diffuser (15) of the duct (12) and its controllable rotary shaft (36) is supported at its ends by opposite side walls (15B, 15C) of said diffuser.

15. The arrangement as claimed in claim 14,
**characterized in that** stops (15E, 15F) are provided in said diffuser (15) to mark the two respectively parallel and perpendicular limit positions of said throttle valve (35) relative to said duct (12).

16. The arrangement as claimed in one of claims 9 to 15,
**characterized in that**, on one of said ends of said rotary shaft (19, 36) to which said mobile element (18, 35) is fixedly attached, a lever (25) is provided outside said duct (12) and connected to said control means (17A, 17B).
